Europäisches Patentamt

European Patent Office

Office européen des brevets

(11) Publication number: **0 093 196**

A1

# EUROPEAN PATENT APPLICATION

(21) Application number: **82109316.8**

(22) Date of filing: **08.10.82**

(51) Int. Cl.³: **B 23 Q 7/14**
**B 23 Q 11/00**

(30) Priority: **04.05.82 JP 73315/82**

(43) Date of publication of application:
**09.11.83 Bulletin 83/45**

(84) Designated Contracting States:
**CH DE FR GB IT LI**

(71) Applicant: **Kabushiki Kaisha Matsuura Kikai Seisakusho**
**No. 1, Aza Numa Urushihara-machi 1**
**Fukui-shi Fukui-ken(JP)**

(72) Inventor: **Kitajima, Yasuhiro**
**No. 30-29 Koinazu-cho**
**Fukui-shi Fukui-ken(JP)**

(74) Representative: **Engelhardt, Guido, Dipl.-Ing.**
**Ehlersstrasse 17 Postfach 1350**
**D-7990 Friedrichshafen(DE)**

(54) Workpiece exchanging device.

(57) A workpiece exchanging device (1) of a machine tool (16). A workpiece (24) is mounted on each conveyor pallet (9) and removed therefrom, and the conveyor pallets (9) are supported for reciprocating movement by a pallet support member (7) rotatably supported on a frame (2). The plurality of conveyor pallets (9) supported on the pallet support member (7) are alternately moved, between a position on the pallet support member (7) and a position on the machine tool (16) for doing work thereon. Switching between the conveyor pallets (9) supported on the pallet support member (7) is effected by rotating the pallet support member (7).

./...

EP 0 093 196 A1

FIG. 1   FIG. 2

Kabushiki Kaisha Matsuura
Kikai Seisakusho
Fukui-shi, Fukui-ken, Japan

Patentanwalt
Schloss·tr. 17 - ©07541/7 26 67
D-7730 Friedrichshafen 1
0093196

## WORKPIECE EXCHANGING DEVICE

- 1 -

This invention relates to a workpiece exchanging device of a machine tool.

Heretofore, an exchanging device of a machine tool for doing work on workpieces is known which comprises two workpiece mounting pallets arranged in side-by-side relation and movable in reciprocatory movement between a workpiece exchaning position in which the workpieces are exchanged and a working position in which work is done on the workpieces by the machine tool, so that when one of the pallets is in the working position the other pallets is in the workpiece exchanging position. This workpiece exchaning device of the prior art has suffered the disadvantage that a large space is required for accommodating two pallets.

An additional disadvantage has been that it is necessary to perform cleaning of the pallets for removing chips and the like therefrom each time exchanging of the workpieces is carried out and the operation of removing chips from the surface of the pallet is a time-consuming operation.

This invention has been developed for the purpose of obviating the aforesaid disadvantages of the prior art. Accordingly the invention has as its object the provision of a workpiece exchanging device of simple construction requiring no more space than is necessary.

The aforesaid object is accomplished according to the invention by providing a workpiece exchanging device comprising a pallet support member rotatably supported by a rotary shaft, and a drive for driving the pallet support member to cause same to make a one-half revolution each time it is driven.

The invention enables exchanging of workpieces by means of two pallets by using a space large enough to accommodate only one pallet, so that exchanging of the workpieces can be carried out efficiently by a device of simple construction.

The workpiece exchanging device according to the invention further comprises a plurality of nozzles mounted on a lower portion of the device for directing streams of washing and cleaning fluid against the underside of the pallet support member, to enable removing of chips from the pallet to be readily effected.

Fig. 1 is a front view of a workpiece exchanging device according to the invention and a machine tool located adjacent thereto; and

Fig. 2 is a sectional view taken along the line II-II in Fig. 2.

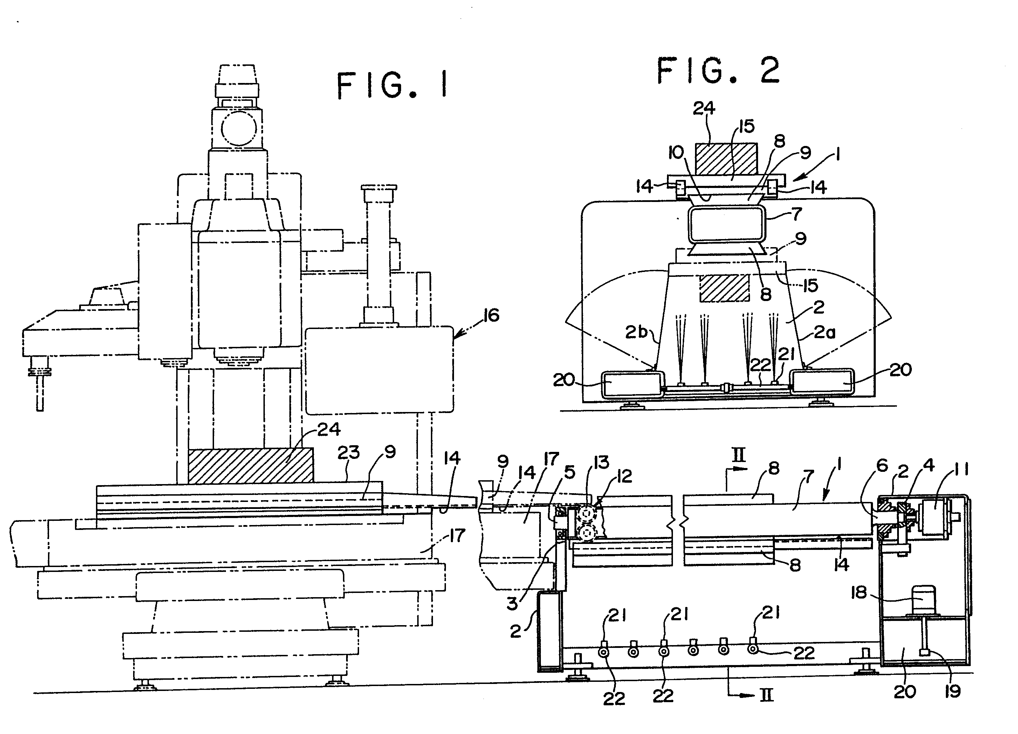

A preferred embodiment of the invention will be described by referring to Figs. 1 and 2, in which a workpiece exchanging device 1 comprises a pallet support member 7 including a first shaft portion 5 and a second shaft portion 6 at its end portions journalled for rotation by bearing members 3 and 4 respectively mounted on a frame 2. The pallet support member 7 is provided with pallet guides 8 located symmetrically with respect to the axis of its rotation. The pallet guides 8 are each constructed such that it guides a conveyor pallet 9 freely for sliding movement and supports the pallet 9 without dropping same even if it is located in an upsidedown position. The most simple construction would be that the pallet guides 8 and pallets 9 are each formed as a dovetail mortise and a dovetail tenon. In the embodiment shown, the pallet support member 7 is formed with pallet guides 8 each in the form of a dovetail tenon, and the conveyor pallets 9 are each formed with a dovetail mortise 10. The second shaft portion 6 of the pallet support member 7 has connected thereto, either directly or through reducing means, a motor 11 rotating the member 7 which may be a hydraulic motor, pneumatic motor, electric motor or other suitable rotating means. The motor 10 is advantageously rotating means capable of intermittently rotating the pallet support member 7 to make one-half revolution through 180 degrees each time it is rotated.

The pallet support member 7 is equipped with pallet reciprocating means 12 which, in the embodiment shown, comprises a plurality of pinions 13 driven by a motor, not shown, for rotation. One pinion 13 is located on either side of each pallet guide 8 or in the middle as viewed in the direction of movement of the conveyor pallets 9 in a condition such that the pallets 9 can be stably moved in reciprocating movement. The pinions 13 mounted on the two pallet guides 8 may be driven by separate motors or by a common motor by using clutch means to enable the pinions 13 to be controlled separately in their rotation. The conveyor pallets 9 are each formed with a rack or racks 14 in meshing engagement with the pinion or pinions 13 on the pallet guides 8.

The conveyor pallets 9 are each equipped with means for removably mounting a workpiece 24 which may be in the form of a T groove formed in the table of the machine tool and bolts or tap holes.

The pallet reciprocating means 12 may comprise an air cylinder, hydraulic cylinder, etc.

The workpiece exchanging device 1 is located adjacent a machine tool 16 in such a manner that when a table 17 of the machine tool 16 has moved to its end located adjacent the workpiece exchanging device 1, the conveyor pallet 9 can be smoothly transferred from the table 17 to the workpiece exchanging device 1 and vice versa.

The frame 2 is in the form of a tank enclosing the pallet support member 7 and supports a washing fluid tank 20, such as an oil tank, provided with a pump 19 driven by drive means 18, and pipes 22 arranged in a lower portion of the pallet support member 7 and each provided with a nozzle 21. The washing fluid delivered by the pump 19 is passed through the pipes 22 and ejected through the nozzles 21 against the conveyor pallet 9 to wash and clean the surface of the conveyor pallet 9 located in an upsidedown position. The fluid containing chips, after used for washing and cleaning, is collected on the bottom of the frame 2 in the form of a tank and strained as by a filter to allow the washing fluid to be returned to the fluid tank 20 to be recycled. The dirty oil containing chips collected on the bottom of the frame 2 may be discharged through a drain.

Operation of the workpiece exchanging device 1 of the aforesaid construction will be described. The workpiece 24 is mounted on the upper conveyor pallet 9. Then the pallet reciprocating means 12 is actuated while the table 17 of the machine tool is in close proximity to the workpiece exchanging device 1, and the conveyor pallet 9 is transferred on to the table 17 of the machine tool 16 by the action of the rack 14 and pinion 13, for example. The pallet reciprocating means is deactuated while an end portion of the rack 14 is still meshing with the pinion 13, to securedly affix the conveyor pallet 9 to the surface of the table 17.

Then the table 17 is driven and the conveyor pallet 9 or a pallet 23 having the workpiece 24 secured thereto is fed to a predetermined working position in which work is done on the workpiece 24.

During this period, the rotating means 11 is actuated to rotate the pallet support member 7 through 180 degrees to move the other conveyor pallet 9 to an upper position. A workpiece affixed to the conveyor pallet 9 in this condition, and the pallet support member 7 is again rotated through 180 degrees. The step may be dispensed with, if so desired.

Upon completion of work done on the workpiece 24, the table 17 is moved to connect the conveyor pallet 9 to the pallet reciprocating means 12 which is then actuated to transfer the conveyor pallet 9 to a predetermined position on the pallet member 7, where the workpiece 24 on which work has been done is removed.

The rotating means 11 is then actuated to rotate the pallet support member 7 through 180 degrees. As the conveyor pallet 9 is moved to an upsidedown position, chips and the like on the surface of the conveyor pallet 9 move in part downwardly by their own weight, and the washing means is actuated to direct streams of washing fluid against the pallet support member 7 through the nozzle 21 to effect washing and cleaning of the conveyor pallet 9 by removing the rest of the chips therefrom. Meanwhile the conveyor pallet 9 that has moved to an upper or upstanding position is transferred on to the pallet support member 7, either directly or after affixing a workpiece thereto if the aforesaid step of mounting a workpiece is eliminated, by the action of the pallet reciprocating means 12, to enable work to be done on the workpiece.

The conveyor pallet 9 that has been washed is rotated through 180 degrees by actuation of the rotating means 11 to move an upper or upwardly facing position, in which it has a workpiece mounted thereon. The conveyor pallet 9 having a workpiece mounted thereon stands by either as it is or after being rotated through 180 degrees again.

The advantages offered by the invention will be described in detail by repeating the aforesaid operation steps.

According to the invention, two conveyor pallets can be supported simultaneously by a single pallet support member, so that the space for placing the conveyor pallets can be greatly reduced. This saving in space can be achieved by a simple mechanism of rotatably supporting the pallet support member.

Rotation of the conveyor pallet supported on the pallet member allows chips and the like to move downwardly by their own weight and washing of the conveyor pallet can be readily performed by directing streams of washing fluid against the pallet from below. Thus the washing operation operation is facilitated and the fluid directed against the conveyor pallet from below can be readily collected in a tank. This enables oil to be used as a washing fluid, and operation is facilitated.

When the conveyor pallets are provided with racks as shown, the racks might extend from the area necessary for performing work on a workpiece. In this case, a portion of the rack which cannot be eliminated may be made to project from the pallet without requiring to provide more space than is necessary for a portion of the conveyor pallet necessary for affixing a workpiece.

The frame 2 may be constructed such that left and right side walls 2a and 2b in Fig. 2 are hingedly connected to allow same to be opened and closed as shown in dash-and-dot line position. This facilitates removing of dust from the frame 2 and enables mounting of a workpiece on a conveyor pallet in an upsidedown position and removing the workpiece therefrom to be effected. In this case, the trouble of rotating the pallet support member through 180 degrees for mounting a workpiece and then rotating same again through 180 degrees after mounting the workpiece as aforesaid can be eliminated, thereby reducing operation time. Also, this is conducive to elimination of the need to mount a workpiece on the conveyor pallet between the step of rotating the pallet support member and transfer of the conveyor pallet in the aforesaid process of mounting a workpiece on the conveyor pallet after it has been rotated through 180 degrees to move an upper or upwardly facing position and then transferring the conveyor pallet on to the table of the machine tool.

In the embodiment shown and described hereinabove, the pallet support member is provided with two pallet guides. The invention is not limited to this specific number of pallet guides and a large number of pallet guides, such as four or six, may be used. When this is the case, the angle of rotation of the pallet support member may vary depending on the number of pallet guides. When the pallet guides are more than two in number, it is not essential that they be mounted symmetrically.

WHAT IS CLAIMED IS:

1. A workpiece exchaning device comprising:

a pallet support member (7) rotatably supported on a frame (2);

a plurality of pallet guides (8) mounted on said pallet support member (7);

Pallet reciprocating means (12) mounted on said pallet support member (7), said pallet reciprocating means (12) corresponding in number to said pallet guides ( 8);

a plurality of conveyor pallets (9) each operatively supported by one of said pallet guides (8) and adapted to be driven by one of said pallet reciprocating means (12); and

rotating means (11) for rotating said pallet support member (7) through a predetermined angle;

Wherein a workpiece (24) can be affixed to the surface of each said conveyor pallet (9).

2. A workpiece exchanging device as claimed in claim 1, wherein said pallet reciprocating means (12) each comprise at least one pinion (13) attached to said pallet support member (7) and at least one rack (14) attached to each said conveyor pallet (9) and meshing with said pinion (13).

3. A workpiece exchanging device as claimed in claim 1 or 2, further comprising a plurality of nozzles (21) for directing streams of fluid against the conveyor pallet (9) located above the nozzles, pipes (22) supporting said nozzles (21), and a washing fluid tank (20) connected to said pipes (22) for containing a washing fluid.

4. A workpiece exchaning device as claimed in claim 1 or 2, wherein said frame ( 2) includes side walls (2a,2b) each hingedly connected to a lower end of the frame (2) for movement between an open position and a closed position.

5. A workpiece exchaning device as claimed in claim 1 or 2, further comprising a plurality of nozzles (21) for directing streams of fluid against the conveyor pallet (9) located above the nozzles (21), pipes (22) supporting said nozzles (21), and a washing fluid tank (20) connected to said pipes (22) for containing a washing fluid, and wherein said frame (2) includes side walls (2a, 2b) hingedly connected to a lower end of the frame (2) for movement between an open position and a closed position.

0093196

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 819 616 (BMW) <br> * Page 4, line 27 - page 7, line 11; claims; figures * | 1,2 | B 23 Q 7/14 <br> B 23 Q 11/00 |
| A | GB-A-1 202 363 (MOLINS) <br> * Whole document * | 1,3-5 | |
| A | DE-A-2 039 961 (MOLINS) <br> * Whole document * | 1,3-5 | |
| A | DE-C- 542 820 (BÄHRE) <br> * Page 2, lines 81-84; figures 8,9 * | 2 | |
| A | FR-A-1 591 599 (WOLLENHAUPT et al.) <br> * Page 9, lines 29-39; page 12, lines 29-34; figure 6 * | 2 | **TECHNICAL FIELDS SEARCHED (Int. Cl. ³)** |
| A | US-A-3 271 840 (SOLSKI et al.) <br> * Column 5, line 30 - column 6, line 34; figures 9-16 * | 2 | B 23 Q |
| A | DE-A-1 961 567 (HECKERT) <br> * Pages 4-7; figures * | 3-5 | |
| A | FR-A-1 171 554 (RENAULT et al.) <br> * Page 7, lines 13-35; figure 15 * | 3,5 | |

--- -/-

The present search report has been drawn up for all claims

| Place of search THE HAGUE | Date of completion of the search 19-07-1983 | Examiner ROSENBAUM H.F.J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. ³) |
|---|---|---|---|
| A | FR-A-2 094 268 (HUARD-U.C.F.) | | |
| A | US-A-4 090 287 (SELANDER) | | |
| A | DE-A-3 043 361 (KORDYS et al.) | | |

TECHNICAL FIELDS SEARCHED (Int. Cl. ³)

The present search report has been drawn up for all claims

| Place of search | Date of completion of the search | Examiner |
|---|---|---|
| THE HAGUE | 19-07-1983 | ROSENBAUM H.F.J. |